Europäisches Patentamt

European Patent Office

Office européen des brevets

(19)

(11) **EP 1 587 232 A2**

(12) **EUROPEAN PATENT APPLICATION**

(43) Date of publication:
19.10.2005 Bulletin 2005/42

(51) Int Cl.7: **H04J 11/00**

(21) Application number: 05008187.6

(22) Date of filing: 14.04.2005

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **14.04.2004 KR 2004025958**

(71) Applicant: **Samsung Electronics Co.,Ltd.**
**Yeongtong-gu Suwon-si, Gyeonggi-do (KR)**

(72) Inventor: **Lyu, Dug-In**
**Yeongtong-gu Suwon-si Gyeonggi-do (KR)**

(74) Representative: **Grünecker, Kinkeldey,**
**Stockmair & Schwanhäusser Anwaltssozietät**
**Maximilianstrasse 58**
**80538 München (DE)**

(54) **Method of selecting PN codes for reducing interference between users and a method therefor**

(57)   A method and apparatus for reducing interference between users in an MCR (Multiple Chip Rate) direct-sequence CDMA (Code Division Multiple Access) system. The method includes classifying a chip transmission rate for each user in a cell of the MCR direct-sequence CDMA system, and selecting the PN codes having a predetermined rate, which is higher than that of the PN codes of users having a low-speed chip transmission rate, with respect to users having a high chip transmission rate in accordance with the classified chip transmission rate of the respective user.

FIG.1

**Description**

The present invention relates generally to a method for reducing interference between users in an MCR (Multiple Chip Rate) direct-sequence CDMA (Code Division Multiple Access) system.

A direct-sequence CDMA system has been adopted as the standard of the 3$^{rd}$ generation wireless system. The 3$^{rd}$ generation wireless system supports multimedia services having multiple data transmission rates. Accordingly, in the direct-sequence CDMA system, data transmission according to the multiple data transmission rates has been performed through diverse methods such as SFs (Spreading Factors), multiple codes, and MCRs (Multiple Chip Rates).

In a variable SF direct-sequence CDMA system, the SF of a respective user varies according to the data transmission rate required by the user Also, in a multiple-code direct-sequence CDMA system, the number of spreading codes, i.e., PN (Pseudo Noise) codes, for each user varies according to the data transmission rate required by the user The user's signals are then divided into a plurality of bit streams spreading simultaneously with other PN codes.

Additionally, in an MCR direct-sequence CDMA system, the chip transmission rate of the respective user varies according to the data transmission rate required by the user. Because the occupied bandwidth of a low-speed chip transmission rate signal is narrower than that of a high chip transmission rate signal, the frequency spectrum for demodulating all signals having different chip transmission rates in the same carrier is not required. Accordingly, the user's signals having the low-speed chip transmission rate are modulated with different carriers and then overlaid with the signals having a high chip transmission rate for efficient use of the wireless frequency spectrum. Consequently, the interference occurring between the overlaid signals cannot be avoided.

Due to the coexistence of the signals having different chip transmission rates in the same frequency band, the performance analysis of the MCR direct-sequence CDMA system is much more complicated in comparison with other conventional direct-sequence CDMA systems.

The performance of the MCR direct-sequence CDMA system having random PN codes and defined PN codes is described in "Issues in Multi-Media Packet CDMA Personal Communication Network" (T. H. Wu, Ph.D. dissertation, Dept. Elec. Eng., Univ. of Maryland College Park, Aug. 1994), "Analysis of The Performance of an Asynchronous Multiple Chip Rate DS/CDMA System" (D. Lyu, I. Song, Y Han, and H. M. Kim, Int.-J. Electron. Common., vol. AEU-51, no.4, pp.213-218. July 1997), "Effect of Signature Sequence on the Performance of Asynchronous Multiple Chip Rate DS/CDMA System" (D. Lyu, Wireless Personal Communications, vol. 24, pp.449-462, 2003), and "Multiple Chip Rate DS/CDMA System and its Spreading Code Dependent Performance Analysis" (X. H. Chen, T. Lang, and J. Oksman, IEEE Proc. Comm., vol. 145, no.5, pp.371-377, Oct. 1998).

Also, in the thesis "Variable Chip Rate CDMA" (T. Minn and K. Y. Siu, Vehicular Technology Conference Proceedings, 2000. VTC 2000-Spring Tokyo. 2000 IEEE 51, Volume 3, 15-18, May 2000, pp. 2267-2271.), the capacity of the MCR direct-sequence CDMA system having orthogonal PN codes has been analyzed under the assumption that the interference occurring between the signals having the different chip transmission rates can be avoided by using the orthogonal PN codes.

In all of the methods described above, it has been assumed that the time-domain chip waveform is rectangular in order to simplify the performance analysis. However, the interference occurring between the overlaid signals having the different carriers is dependent upon the form of a PSD (Power Spectral Density) of the transmitted signals detected from the chip waveform. Accordingly, in order to obtain a significant result, it is important to consider the actual chip waveform in estimating the performance of the MCR direct-sequence CDMA system.

In the direct-sequence CDMA system, an RRC (Root Raised Cosine) chip waveform is utilized in a PSF (Pulse Shaping Filter) of a transmitting part, and a corresponding MF (Matching Filter) is used in a receiving part in order to maximize the SNR (Signal-to-Noise Ratio). Here, the time convolution between the PSF and the MF is an RC (Raised Cosine) function. Further, in the RC function, zero-crossing is detected at sampling points of chip-to-chip distances, and thus an ICI (Inter Chip Interference) can be removed.

When the interference signals are time-aligned with a desired signal (for example, if the interference signals are down-linked from the same cell), the time convolution between the PSF and the MF is also the RC function. Accordingly, the ICI can be removed from the interference signals. That is, the interference is completely dependent upon a cross relation between the PN code of the desired user and the PN codes of the interfering users. That is, if the PN codes of the desired user and the interfering users are orthogonal, the IUI can be avoided.

However, in the MCR direct-sequence CDMA system, the MF of the desired user does not match the chip PSF of the interfering users. As a result, the time convolution between the PSF of the interfering users and the MF of the desired user cannot become the RC function. As a result, the desired user is damaged by the interference caused by other users using different chip transmission rates, even if the orthogonal PN codes are used. The thesis "Variable Chip Rate CDMA" (T. Minn and K. Y Siu, Vehicular Technology Conference Proceedings, 2000. VTC 2000-Spring Tokyo. 2000 IEEE 51, Volume 3, 15-18, May 2000, pp. 2267-2271.) has failed to notice this point.

Consequently, it is necessary research the interference between the signals having different chip transmission rates in consideration of the actual chip waveform and in reduction of the IUI using the PN codes selected in the down-link performance of the MCR direct-sequence CDMA system.

## SUMMARY OF THE INVENTION

Accordingly, the present invention has been designed to solve the above and other problems occurring in the prior art and the object of the present invention is to provide a method and apparatus for selecting PN codes in an MCR direct-sequence CDMA system which can reduce an IUI (Inter User Interference).

This object is solved by the invention as claimed in the independent claims.

Preferred embodiments are defined in the dependent claims.

There is provided a method of selecting PN codes in a multiple chip rate (MCR) direct-sequence CDMA system for reducing interference between users. The method includes the steps of classifying a chip transmission rate for each user in a cell of the MCR direct-sequence CDMA system, and selecting the PN codes having a predetermined rate that is higher than that of the PN codes of users having a low-speed chip transmission rate, with respect to users having a high chip transmission rate in accordance with the classified chip transmission rate of the respective user.

The present invention will be more apparent from the following detailed description taken in conjunction with the accompanying drawings, in which:

FIG. 1 is a block diagram illustrating a transmitter to which the present invention is applied;
FIG. 2 is a block diagram illustrating an i-th receiver according to an embodiment of the present invention;
FIG. 3 is a view illustrating a tree structure for generating OVSF codes used in a conventional CDMA communication system;
FIG. 4 is a graph illustrating a chip duration of users having a low chip transmission rate and a bit duration of users having a high chip transmission rate;
FIG. 5 is a graph illustrating a chip duration of users having a low chip transmission rate and a bit duration of users having a high chip transmission rate; and
FIG. 6 is a graph illustrating a chip duration of users having a low chip transmission rate and a bit duration of users having a high chip transmission rate.

Preferred embodiments of the present invention will be described in detail herein below with reference to the accompanying drawings. In the following description of the present invention, the same drawing reference numerals are used for the same elements even in different drawings. Additionally, a detailed description of known functions and configurations incorporated herein will be omitted when it may obscure the subject matter of the present invention.

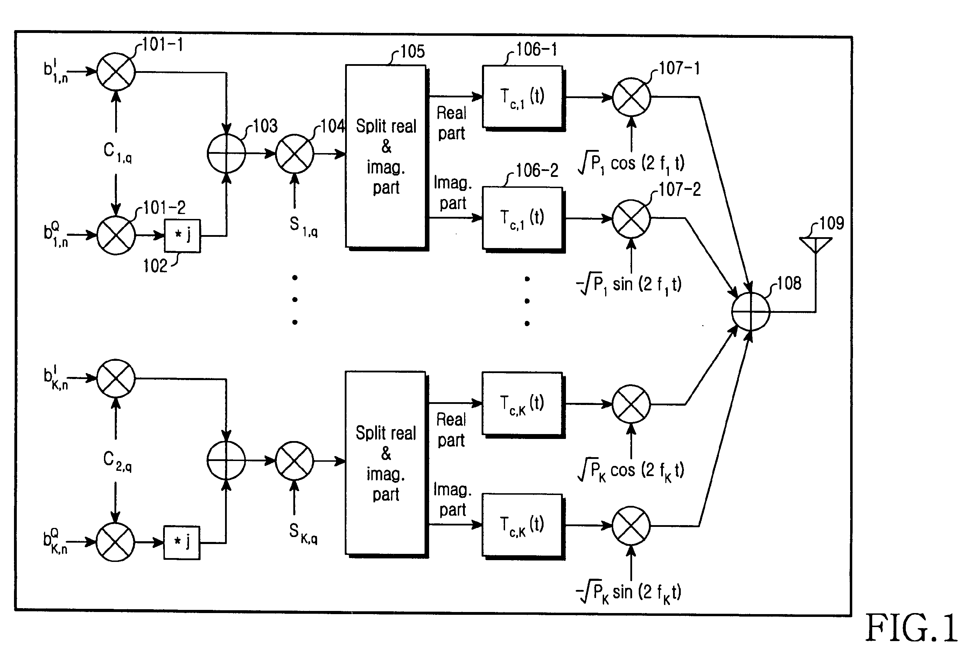

FIG. 1 is a block diagram illustrating a transmitter to which the present invention is applied. Referring to FIG. 1, a data symbol $b_{k,n}$ input to the transmitter is represented as $b^I_{k,n} + jb^Q_{k,n}$, and is the n-th data symbol of the k-th user. The input data symbol is multiplied by a PN code $C_{k,q}$ ($0 \leq q \leq SF_k$, where $SF_k$ is the spreading factor of the k-th user) of the k-th user through multipliers 101-1 and 101-2. The imaginary part ($jb^Q_{k,n}$) of the input data symbol is conjugated through a conjugation unit 102. The real part and the imaginary part (conjugated) of the input data symbol multiplied by the PN code are added together by an adder 103, and are then multiplied by the q-th chip $S_{k,q}$ of a scrambling code of the k-th user through a multiplier 104. Here, the q-th chip $S_{k,q}$ of the scrambling code is represented as $(S^I_{k,q} + iS^Q_{k,q})/\sqrt{2}$.

As described above, the PN codes are used to differentiate the users in the same cell, and the scrambling codes are used to differentiate the different cells.

The data symbol is split into a real part and an imaginary part through a splitter 105. The split real part and imaginary part are sampled in the unit of a chip duration $T_{c,k}$ of the k-th user corresponding to a chip transmission rate $\tau_k$ (for example, $T_{c,k} = 1/\tau_k$) through samplers 106-1 and 106-2, and then a transmission power $P_k$ and a carrier frequency $k_f$ are added to the sampled read part and imaginary part to create carriers. In order to create the carriers, the real part is multiplied by $\sqrt{P_1}\cos(2f_1 t)$, and the imaginary part is multiplied by $\sqrt{-P_1}\sin(2f1t)$. Here, $P_k$ and $k_f$ denote the transmission power and the carrier frequency of the k-th user, respectively. The created carriers are added together through an adder 108 and then transmitted through an antenna 109.

In the above-described construction of FIG. 1, respective variables $b^I_{k,n}$, $b^Q_{k,n}$, $C_{k,q}$, $S^I_{k,q}$, and $S^Q_{k,q}$ have a binary value (for example, +1 or -1).

As described above, the PN codes are used to differentiate the users in the same cell, and the scrambling codes are used to differentiate the different cells.

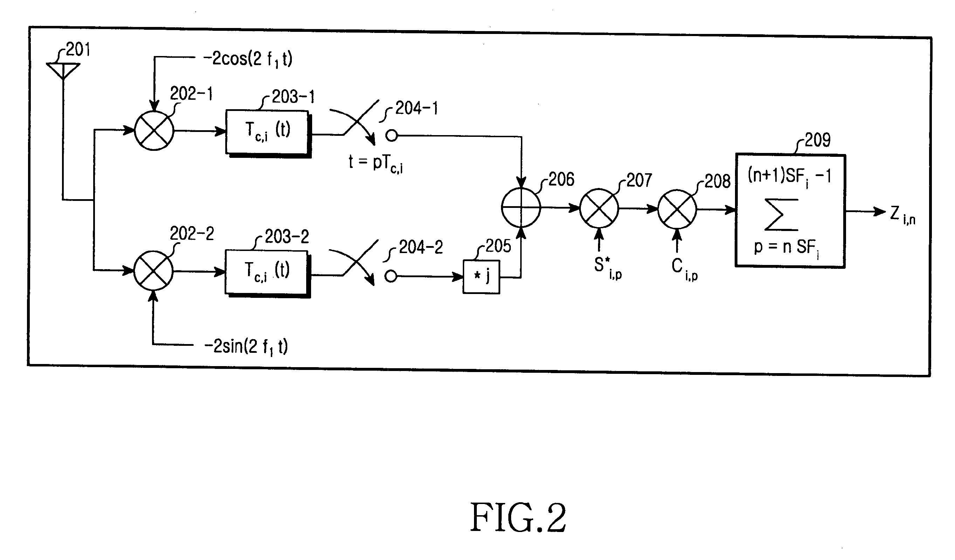

FIG. 2 is a block diagram illustrating an i-th receiver according to an embodiment of the present invention. As illustrated in FIG 2, the i-th receiver is constructed to correspond to the transmitter illustrated in FIG. 1. Referring to FIG. 2, carriers are removed from the real part and the imaginary part of data received through an antenna 201 through multipliers 202-1 and 202-2, and the real part and the imaginary part of the data are processed in the unit of the chip duration $T_{c,i}$ of the i-th user through samplers and switches 203-1, 203-2, 204-1 and 204-2, and then added together through an adder 206. A decision variable $Z_{i,n}$ for the n-th data symbol of the i-th user is obtained by removing the scrambling code and the PN code from the data through multipliers 207 and 208.

In order to maximize the signal-to-noise ratio (SNR), the received signal is filtered through MF $\psi *T_{c,i}(-t)$ for the chip waveform of the desired user before the sampling operation. Here, it is assumed that the system according to the present invention has cells, each having K users, and there is no interference between the cells. Also, if it is assumed that there is an AWGN (Additive White Gaussian Noise) channel, $Z_{i,n}$ is expressed by Equation (1).

$$\mathbf{Z}_{i,n} \;=\; \mathbf{D}_{i,n} + \sum_{k=1,k\neq i}^{K} \mathbf{I}_{k,i,n} + \mathbf{N}_{i,n} \qquad\qquad \dots.. \ (1)$$

The first term $D_{i,n}$ of the right side of the Equation (1) denotes a data symbol to be transmitted to the desired user i, and is expressed by Equation (2).

$$D_{i,n} = b_{i,n}SF_i\sqrt{P_i} \qquad\qquad (2)$$

Also, the second term

$$\sum_{k=1,k\neq i}^{K} \mathbf{I}_{k,i,n}$$

of the right side of the Equation (1) indicates the interference from other K-1 users in the cell, and respective $I_{k,i,n}$ is expressed by Equation (3).

$$\mathbf{I}_{k,i,n} \;=\; \sqrt{P_k}\; \sum_{p=SF_i n}^{SF_i(n+1)-1} \mathbf{S}_{i,p}^{*}C_{i,p} \sum_{q=-\infty}^{\infty} b_{k,\lfloor q/SF_k\rfloor}S_{k,q}C_{k,q}\left[\phi_1(pT_{c,i}) + j\phi_2(pT_{c,i})\right]$$

$$\dots..(3)$$

Also, the third term $N_{i,n}$ of the Equation (1) refers to AWGN, and is expressed by Equation (4).

$$\mathbf{N}_{i,n} \;=\; \sum_{p=SF_i n}^{SF_i(n+1)-1} \mathbf{S}_{i,p}^{*}C_{i,p} \int_{-\infty}^{\infty} n_i(pT_{c,i} - \lambda)\Psi_{T_{c,i}}^{*}(-\lambda)d\lambda \qquad\qquad \dots.. \ (4)$$

The term "$n_i(t)$" in Equation (4) indicates AWGN in the receiver i having a two-sided spectral density of $N_0/2$.

Additionally, $\phi_1(t)$ and $\phi_2(t)$ in Equation (4) are time convolutions of the PSF of the user k and the MF of the user i, respectively. $\phi_1(t)$ and $\phi_2(t)$ can be expressed by Equations (5) and (6), respectively.

$$\phi_1(t) \;=\; \int_{-\infty}^{\infty} \Psi_{T_{c,k}}(t - \lambda - qT_{c,k})\Psi_{T_{c,i}}^{*}(-\lambda)\cos[2\pi\Delta f_{k,i}(t - \lambda)]d\lambda \qquad\qquad \dots..(5)$$

$$\phi_2(t) \;=\; \int_{-\infty}^{\infty} \Psi_{T_{c,k}}(t-\lambda-qT_{c,k})\Psi^*_{T_{c,i}}(-\lambda)\sin[2\pi\Delta f_{k,i}(t-\lambda)]d\lambda \qquad \ldots\ldots (6)$$

The term "$\Delta f_{k,i}$" in Equations (5) and (6) indicates a carrier frequency separation between the desired user i and the interfering user k. That is, $\Delta f_{k,i}$ can be expressed by Equation (7).

$$\Delta f_{k,i} = f_k\text{-}f_i. \qquad (7)$$

The cosine part of Equation (5) and the sine part of Equation (6) reflect the effect according to the carrier frequency separation between the users. Accordingly, if the carrier frequency separation exists, $\phi_1(t)$ and $\phi_2(t)$ do not become the RC function due to their sinusoidal parts. However, even if the carrier frequency separation does not exist and the sinusoidal parts in the Equations (5) and (6) are removed, the inconsistency of the chip duration of the PSF of the user k with the chip duration of the MF of the user i prevents $\phi_1(t)$ and $\phi_2(t)$ from becoming the RC function. Accordingly, in the receiver, the IUI (Inter User Interference) cannot be avoided due to the interference signal having the different chip transmission rate.

Therefore, the possibility of error occurrence in the received data of the user i for receiving the signal is affected by the interference from other users.

The interference power is given by $\text{Var}(I_{k,i,n}) = E|I_{k,i,n}|^2$. Here, $E\{\}$ is a statistical expected value. In the random PN codes, a closed-form solution to $\text{Var}(I_{k,i,n})$ is obtained by averaging the PN codes as shown in Equation (8).

$$\begin{aligned}\text{Var}(I_{k,i,n}) \;&=\; E\left(I_{k,i,n}\cdot I^*_{k,i,n}\right)\\ &=\; 2P_k \text{SF}_i \sum_{q=-\infty}^{\infty}\left\{\phi_1^2(0)+\phi_2^2(0)\right\}\end{aligned} \qquad \ldots\ldots (8)$$

Here, $\phi_1(0)$ is given by in Equation (9).

$$\phi_1(0) = \int_{-\infty}^{\infty}\Phi_k(f)\Phi_i(f-\Delta f)\cos(2\pi f q T_{c,k})df \qquad \ldots\ldots (9)$$

Also, $\phi_2(0)$ is can be expressed as shown in Equation (10).

$$\phi_2(0) = \int_{-\infty}^{\infty}\Phi_k(f)\Phi_i(f-\Delta f)\sin(2\pi f q T_{c,k})df \qquad \ldots\ldots (10)$$

In the above-described equations, $\Phi_k(f)$ is the Fourier transform of $\psi_{Tc,i}(t)$. From the Equation (8), assuming that the chips $C_{k,q}$ are independently and individually distributed in the random variables, Parseval's theorem can be used.

Equations (9) and (10) for $\phi_1(0)$ and $\phi_2(0)$ can easily be obtained using a mathematical integration because $\psi_k(f)$ is not "0" only in a limited frequency range. Unfortunately, it appears as if an efficient closed-form solution for the decided PN code is not possible. Also, in order to calculate the interference power, the Monte-Carlo simulation should be used.

In the present invention, the interference caused by an OVSF (Orthogonal Variable Spreading Factor) codes is determined, and the determined interference is compared with the interference caused by the random codes. In order to simplify the process, the index of the user having a low chip transmission rate is set to "1" and the index of the user having a high chip transmission rate is set to "2".

For the users of the low chip transmission rate, the same system parameter as that used in a broad-band CDMA system for the 3rd generation cellular system is selected. For example, a system parameter having a chip transmission rate of 3.84 Mega chips/sec and an occupied bandwidth of 5 MHz may be used.

For the users of the high chip transmission rate, three chip speeds (e.g., r2 = gxrl, where g is $2^n$ (n=1, 2, 3, 4, ....) are considered in the present invention. Here, g is the ratio of the chip transmission rates between the user of the high chip transmission rate and the user of the low chip transmission rate.

Further, the transmission power becomes $P_k = E_s/(2 \, SF_k \, T_{c,k})$. Here, k=1 and 2, and $E_s$ is a symbol energy.

All the users use the same SF and the same RPC filter of a roll-off alpha factor of 0.22. In order to preserve the mutual-crossing characteristic of the PN codes in the received signal, all the users use the same scrambling code (for example, $S_{k,q}=S_q$, k=1 and 2), and its chip transmission rate is the same as the chip transmission rate of the lowest PN code.

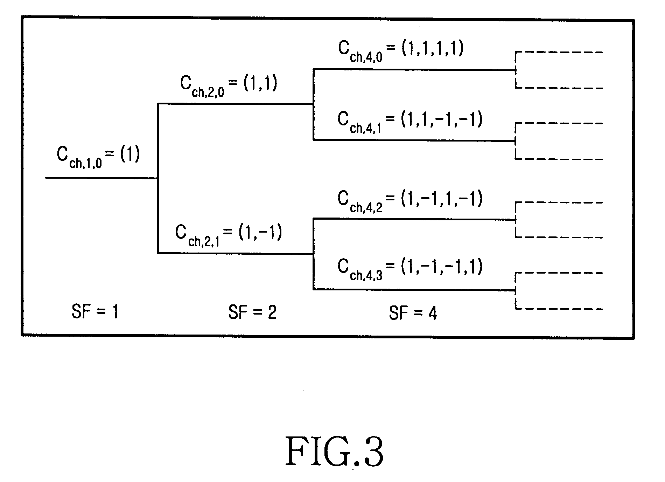

The OVSF codes can be created using a code tree as illustrated in FIG. 3. The OVSF code is distinctively described by $C_{ch,SF,j}$. Here, SF and j denote the spreading factor and the code number ($0 \leq j \leq$ SF-1) of the respective code.

FIG. 3 illustrates a tree structure for generating OVSF codes used in a conventional CDMA communication system. Referring to FIG. 3, in order to create corresponding channelization codes, a pattern in which an inverter is used with respect to each odd number and the original data is repeated with respect to each even number to match the SF is created. In this case, after the initial value of the channelization code is stored in a memory, the corresponding SF and the channelization code are created by performing a bypass up to the necessary SF value or creating a continuous tree using an inverter.

Using the above-described system parameter, a normalized interference power (e.g., $Var(I_{2,1,n}) = E|D_{1,n}|^2$, where r2 has a transmission rate of 2r1, 4r1, and 8r1.) is obtained from all possible OVSF codes for the users having the high chip transmission rate.

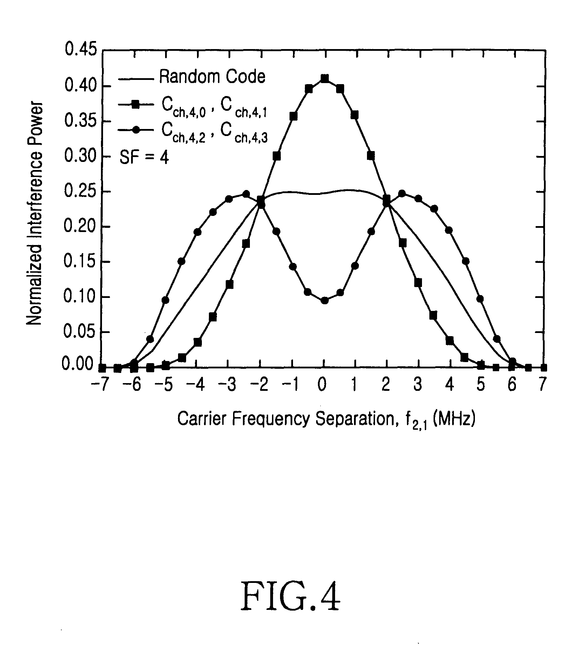

In FIGs. 4, 5, and 6, normalized interference powers with respect to carrier frequency offsets are illustrated. Additionally, in FIGs. 4, 5, and 6, results according to the random PN codes are also illustrated.

Here, it can be seen that the PN codes of the users having the low chip transmission rate do not affect the interference power. The interference between the users having the different chip transmission rates only depends on the chip pattern of the users having the high chip transmission rate, which corresponds to one chip duration of the users having the low chip transmission rate. Here, $C_{ch,SF,j,m}$ indicates the m-th chip of the PN code $C_{ch,SF,j}$.

More specifically, FIG. 4 is a view illustrating a chip duration of users having a low chip transmission rate that is shorter than a bit duration of users having a high chip transmission rate (e.g., g<sf). The OVSF codes $C_{ch,4,0}$, $C_{ch,4,1}$ have the same two-bit pattern "1, 1" or equivalently "-1, -1". Also, the OVSF codes $C_{ch,4,2}$, $C_{ch,4,3}$ have the same two-bit pattern "1, 1" or equivalently "-1, -1".

Accordingly, the OVSF codes $C_{ch,4,0}$, $C_{ch,4,2}$ produce the same interference power curve as the OVSF codes $C_{ch,4,1}$, $C_{ch,4,3}$.

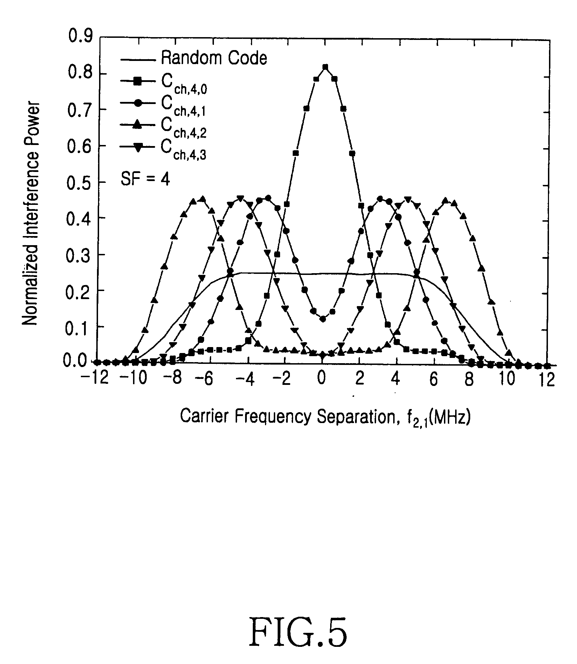

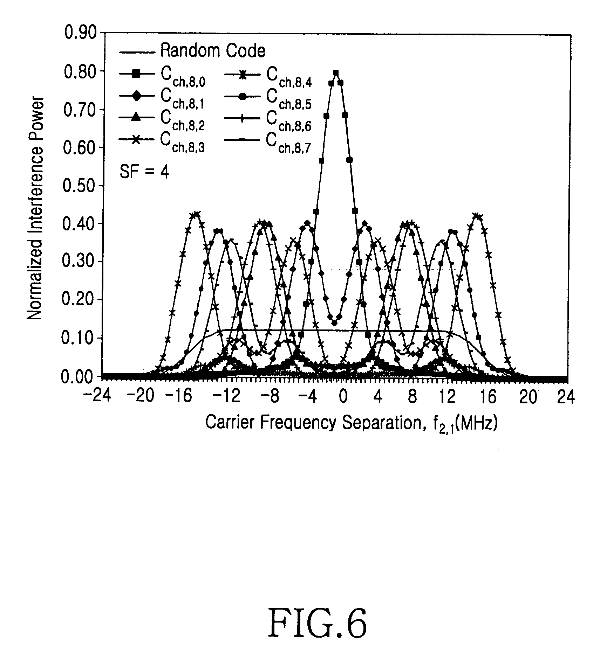

FIG. 5 is a view illustrating a chip duration of users having a low chip transmission rate that is equal to a bit duration of users having a high chip transmission rate (e.g., g=sf), and FIG. 6 is a view illustrating a chip duration of a user having a low chip transmission rate that is longer than a bit duration of users having a high chip transmission rate (e.g., g>sf). As illustrated in FIGs. 4, 5, and 6, all the OVSF codes of the users having the high chip transmission rate have a peculiar interference power curve.

FIGs. 4, 5, and 6 illustrate interference occurring between the signals having the different chip transmission rates even if the orthogonal PN codes are used (even when the carrier frequency separation is 0($\Delta f_{2,1}$=0)). For example, the PN code $C_{ch,4,3}$ for the user having the high chip transmission rate is perpendicular to all the PN codes for the users having the low chip transmission rate, when $r_2=2r_1$ and $r_2=4r_1$. However, because the chip duration of the PSF of the interferer is not equal to the chip duration of the MF of the desired user, the IUI is induced even if the carrier frequency separation is "0" as illustrated in FIGs. 4 and 5.

In the PN codes, the interference power is maintained over the whole area of the carrier frequency offset, and as the carrier frequency separation increases, the interference power decreases monotonically. This is because the interference power of the random code is in proportion to the spectral overlap between the interference signals as shown in the Equations (9) and (10).

Here, because the spectral overlap between the transmitted signals becomes maximum in a place where $\Delta f_{2,1}$=0 and the frequency band occupied by the users having the high chip transmission rate is g times larger than that occupied by the users having the low chip transmission rate, the interference power is continuously kept in the range of $\Delta f_{2,1}$=0.

The interference power of the OVSF code $C_{ch,SF,0}$ becomes maximum in a place where $\Delta f_{2,1}$=0. Also, as the carrier frequency separation increases, the interference power decreases monotonically. Other OVSF codes become local minimum in a place where $\Delta f_{2,1}=0$, and become maximum in a place where $\Delta f_{2,1}=0$ is not satisfied.

FIGs. 4, 5, and 6 illustrate that the average interference power of all the OVSF codes is equal to the average interference power of the random codes in a given carrier frequency separation. Accordingly, if all the OVSF codes of the users having the high chip transmission rate are used, their orthogonal PN codes show the same system performance as the random codes of the MCR direct-sequence CDMA system.

However, if the number of users having the high chip transmission rate is small, the selection of proper PN codes for the users having the high chip transmission rate can reduce the interference power and increase the performance of the system. For example, in comparison to the random codes, the OVSF codes $C_{ch,4,2}$ and $C_{ch,4,3}$ reduce the interference power by 60% on condition that $f_1=f_2$, $r_2=2r_1$. Also, the OVSF codes $C_{ch,4,2}$ and $C_{ch,4,3}$ reduce the interference power by 90% on condition that $f_1=f_2$, $r_2=4r_1$. Also, the interference power is reduced by over 90% by using the OVSF codes on condition that $C_{ch,8,j}$, j=4,5,6,7 and $f_1=f_2$, $r_2=8r_1$.

As described above, because the chip waveforms of the users having the different transmission rates do not coincide with each other, even if the orthogonal PN codes are used in the MCR direct-sequence CDMA system, the signals having the different chip transmission rates interfere with each other. However, it can be recognized that the IUI between the users having the different transmission rates has no relation to the OVSF codes of the users having the low transmission rate, but depends on the OVSF codes of the users having the high chip transmission rate.

Accordingly, the OVSF codes for the relatively less interference power are allocated to the users having the high chip transmission rate, but there is no limit in selecting the OVSF codes for the users having the low chip transmission rate. Accordingly, the selection of the OVSF codes is beneficial when the number of users having the high chip transmission rate is smaller than the number of available OVSF codes.

More specifically, according to the present invention, the IUI between the users having the different transmission rates is reduced by classifying the users in the cell of the MCR direct-sequence CDMA system according to the chip transmission rates, and giving the OVSF codes having speeds two times, four times, and eight time higher than those of the users having the low chip transmission rate with respect to the users having the high chip transmission rate. Consequently, the interference between the users can be reduced using the PN codes of the users having the high chip transmission rate which affect the interference between the users.

The method according to the present invention can be implemented by a program, and stored in a recording medium such as a CD-ROM, RAM, floppy disc, hard disc, optomagnetic disc, etc.

While the present invention has been shown and described with reference to certain preferred embodiments thereof, it will be understood by those skilled in the art that various changes in form and details may be made therein without departing from the scope of the present invention as defined by the appended claims.

## Claims

1. A method of selecting PN codes in a multiple chip rate direct-sequence CDMA system for reducing interference between users, comprising the steps of:

   assigning a chip transmission rate for each user in a cell of the multiple chip rate direct-sequence CDMA system; and
   selecting PN codes having a predetermined rate which is higher than that of PN codes of users having a low-speed chip transmission rate, with respect to users having a high chip transmission rate in accordance with the assigned chip transmission rate of the respective user.

2. The method as claimed in claim 1, wherein the PN code having the predetermined rate is an orthogonal variable spreading factor code.

3. The method as claimed in claim 1 or 2, wherein the predetermined rate is a ratio of chip transmission rates between users having the low chip transmission rate and the high chip transmission rate.

4. The method as claimed in claim 3, wherein the predetermined rate is $2^n$ with n being a positive integer number.

5. An apparatus for selecting PN codes in a multiple chip rate direct-sequence CDMA system for reducing interference between users, wherein a chip transmission rate is assigned for each user in a cell of the multiple chip rate direct-sequence CDMA system, the apparatus comprising:

   means for selecting PN codes having a predetermined rate which is higher than that of PN codes of users having a low-speed chip transmission rate, with respect to users having a high chip transmission rate in accordance with the assigned chip transmission rate of the respective user.

6. The apparatus as claimed in claim 5, wherein the PN code having the predetermined rate is an orthogonal variable spreading factor code.

7. The apparatus as claimed in claim 5 or 6, wherein the predetermined rate is a ratio of chip transmission rates between users having the low chip transmission rate and the high chip transmission rate.

8. The apparatus as claimed in claim 5, wherein the predetermined rate is $2^n$ with n being a positive integer number.

FIG.1

EP 1 587 232 A2

FIG.2

$C_{ch,1,0} = (1)$

$C_{ch,2,0} = (1,1)$

$C_{ch,2,1} = (1,-1)$

$C_{ch,4,0} = (1,1,1,1)$

$C_{ch,4,1} = (1,1,-1,-1)$

$C_{ch,4,2} = (1,-1,1,-1)$

$C_{ch,4,3} = (1,-1,-1,1)$

SF = 1

SF = 2

SF = 4

# FIG.3

FIG.4

FIG.5

FIG.6